# EUROPÄISCHE PATENTSCHRIFT

(11) **EP 4 335 338 B1**
(45) Veröffentlichungstag und Bekanntmachung des Hinweises auf die Patenterteilung: **19.02.2025**
(21) Anmeldenummer: 22195186.6
(22) Anmeldetag: 12.09.2022
(51) Int. Cl.: A47K 3/16, F16B 5/02, F16B 7/18, F16B 37/16

(54) **WANDANKER FÜR EINE SANITÄRWANNE**
WALL ANCHOR FOR A SANITARY BATHTUB
ANCRAGE MURAL POUR UNE BAIGNOIRE SANITAIRE

(43) Veröffentlichungstag der Anmeldung: 13.03.2024
(73) Patentinhaber: EDM-System GmbH, 57399 Kirchhundem (DE)
(72) Erfinder: Malzkorn, Ralf, 34596 Bad Zwesten (DE); Hille, Markus, 57399 Kirchhundem (DE)
(74) Vertreter: Patentanwälte Dörner & Kötter PartG mbB

(56) Entgegenhaltungen:
- CZ-A3- 2 021 317
- DE-U1- 202021 102 437

## Beschreibung

Die Erfindung betrifft einen Wandanker zur wandseitigen Befestigung einer Sanitärwanne nach dem Oberbegriff des Patentanspruchs 1.

Wandanker der vorgenannten Art kommen bei Dusch-, oder Badewanneninstallationen zum Einsatz und dienen der Fixierung des Dusch- bzw. Badewannenrandes an einer Bauwerkswand. Ein solcher Wandanker ist beispielsweise aus der DE 10 2012 110 779 A1 bekannt. Dieser weist einen mittels einer Spannschraube an einer Wand zu befestigenden Grundkörper auf, der mit einem Langloch zur Aufnahme der Spannschraube versehen ist. An dem Grundkörper sind seitliche Arme vorgesehen, die zueinander fluchtend angeordnet sind und der Herstellung der Verbindung mit zwei Wannenleistenprofilen dienen. Hierzu weisen die Arme einen dem Wannenleistenprofil angepasstem Querschnitt auf. Zur Befestigung der Wannenleistenprofile mit einem seitlichen Arm ist jeweils eine Befestigungsplatte vorgesehen, die auf die offene Seite des Wannenleistenprofils aufgelegt und mittels einer Schraube, die in ein in dem Arm angeordneten Innengewinde eingeschraubt wird, befestigt wird.

Ein weiterer Wandanker ist in der DE 20 2021 102 437 U1 beschrieben. Die CZ 2 021 317 A3 offenbart einen Stützfuß zum Verbinden des Einbaurahmens einer Sanitäreinrichtung mit einem Konstruktionsprofil eines Bausystems für den Trockenbau.

Nachteilig an dem vorbekannten Wandanker ist, dass sich die Befestigung der beiden Wannenprofilleisten aufwändig gestaltet. Die beiden Wannenleisten sind an den Armen zu positionieren, wobei an jedem Arm eine Befestigungsplatte positioniert und in der Position gehalten werden muss, sodann durch jede der beiden Befestigungsplatten eine Schraube geführt und in das Innengewinde des jeweiligen Arms verbracht werden muss, wonach die Schrauben angezogen werden müssen.

Hier will die Erfindung Abhilfe schaffen. Der Erfindung liegt die Aufgabe zugrunde, einen Wandanker bereitzustellen, der eine einfache Befestigung eines Wannenprofils, insbesondere ohne das Erfordernis von separaten Befestigungsmitteln ermöglicht. Gemäß der Erfindung wird diese Aufgabe durch einen Wandanker mit den Merkmalen des kennzeichnenden Teils des Patentanspruchs 1 gelöst.

Hier will die Erfindung Abhilfe schaffen. Der Erfindung liegt die Aufgabe zugrunde, einen Wandanker bereitzustellen, der eine einfache Befestigung eines Wannenprofils, insbesondere ohne das Erfordernis von separaten Befestigungsmitteln ermöglicht. Gemäß der Erfindung wird diese Aufgabe durch einen Wandanker mit den Merkmalen des kennzeichnenden Teils des Patentanspruchs 1 gelöst.

Mit der Erfindung ist ein Wandanker zur wandseitigen Befestigung einer Sanitärwanne bereitgestellt, der eine einfache Befestigung eines Wannenprofils, insbesondere ohne das Erfordernis von separaten Befestigungsmitteln ermöglicht. Dadurch, dass die Profilaufnahme eine fest mit dem Grundkörper verbundene Halteleiste und eine relativ zu dieser bewegbare Klemmleiste umfasst, wobei die Mittel zur klemmenden Fixierung einer aufgenommenen C-Profilschiene durch die Klemmleiste gebildet sind, die mit wenigstens einem Spannhebel verbunden ist, über den sie innerhalb einer von der Profilaufnahme aufgenommenen C-Profilschiene gegen diese pressbar ist, ist eine klemmende Befestigung der C-Profilschiene über den Spannhebel ohne zusätzliche Befestigungsmittel ermöglicht. Der wenigstens eine Spannhebel ist um eine in Längsrichtung des Grundkörpers verlaufende Achse schwenkbar.

In Weiterbildung der Erfindung weisen die Halteleiste und die Klemmleiste jeweils einen quaderförmigen Absatz zum Durchtritt durch den Längsschlitz der C-Profilschiene auf. Hierdurch ist ein Eingriff für die den Längsschlitz begrenzenden Schenkel der C-Profilschiene gebildet, wodurch der Formschluss zwischen der C-Profilschiene und der durch die Halteleiste und die Klemmleiste gebildeten Profilaufnahme verbessert ist.

In Ausgestaltung der Erfindung weist die durch die Halteleiste und die Klemmleiste gebildete Profilaufnahme einen dreieck- oder trapezförmigen Querschnitt auf, wobei die C-Profilschiene eine hiermit korrespondierende Innenkontur mit dreieck- oder trapezförmigem Querschnitt aufweist. Hierdurch ist eine verbesserte Klemmung der C-Profilschiene auf der Profilaufnahme erzielt.

In weiterer Ausgestaltung der Erfindung erstreckt sich die Profilaufnahme über die gesamte Länger des Grundkörpers. Hierdurch ist eine maximale Klemmfläche erzielt.

In Weiterbildung der Erfindung ist der Grundkörper T-förmig ausgebildet, wobei sich die Profilaufnahme über beide seitlich auskragenden Arme hin erstreckt. Hierdurch ist eine Verbindung von zwei C-Profilschienen unter gleichzeitiger Ausrichtung in einer Flucht ermöglicht.

In Ausgestaltung der Erfindung ist an jedem Arm des Grundkörpers ein Spannhebel angeordnet. Hierdurch ist eine gleichmäßige Aufbringung einer Klemmkraft erzielt.

In weiterer Ausgestaltung der Erfindung weist der wenigstens eine Spannhebel einen Nocken auf, über den bei einer Schwenkbewegung des Spannhebels eine Verschiebung der Klemmleiste bewirkt ist. Der Nocken wirkt in Art eines Exzenters. Durch die Schwenkbewegung wird über den Nocken eine translatorische Bewegung der Klemmleiste erzielt Hierdurch ist eine klemmende Befestigung eine aufgenommenen C-Profilschiene durch einfaches Verschwenken des Spannhebels erzielbar.

In Weiterbildung der Erfindung ist der wenigstens eine Spannhebel in der Klemmposition von einer in dem Grundkörper eingebrachten Vertiefung aufgenommen. Hierdurch sind vorstehende Kanten vermieden.

In Ausgestaltung der Erfindung weist wenigstens ein Spannhebel wenigstens einen Vorsprung auf, der in Klemmposition in eine in der Vertiefung angeordnete Ausnehmung eingreift. Hierdurch ist eine zusätzliche Fixierung des Spannhebels in der Klemmposition erzielt.

In weiterer Ausgestaltung der Erfindung weist die Klemmleiste Führungsstege auf, die in Führungsschlitzen der Halteleiste geführt sind. Hierdurch ist eine geführte lineare Bewegung der Klemmleiste bei Betätigung des Spannhebels erzielt.

In Ausgestaltung der Erfindung sind Verstellmittel zur Verschiebung des Grundkörpers entlang einer in dem Langloch angeordneten Befestigungsschraube angeordnet, wobei die Verstellmittel eine Hülse umfassen, durch welche die Befestigungsschraube geführt ist, wobei die Hülse ein Ritzel aufweist, das in eine in dem Langloch angeordnete Verzahnung eingreift. Hierdurch ist eine einfache, feinstufige Höheneinstellung durch Drehung der Hülse ermöglicht. Bevorzugt ist die Hülse hierzu mit einem Drehgriff oder einem Stellrad verbunden.

Gegenstand der Erfindung ist weiterhin ein Befestigungsset, umfassend einen Wandanker der vorstehenden Art und wenigstens eine C-Profilschiene, die eine trapez- oder dreieckförmige Innenkontur aufweist und die auf der Profilaufnahme (23) des Wandankers aufschiebbar und durch eine Schwenkbewegung des Spannhebels klemmend fixierbar ist. Vorzugsweise umfasst das Befestigungsset wenigstens einen, bevorzugt zwei weitere Wandhalter zur Befestigung der wenigstens einen C-Profilschiene an der Wand.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

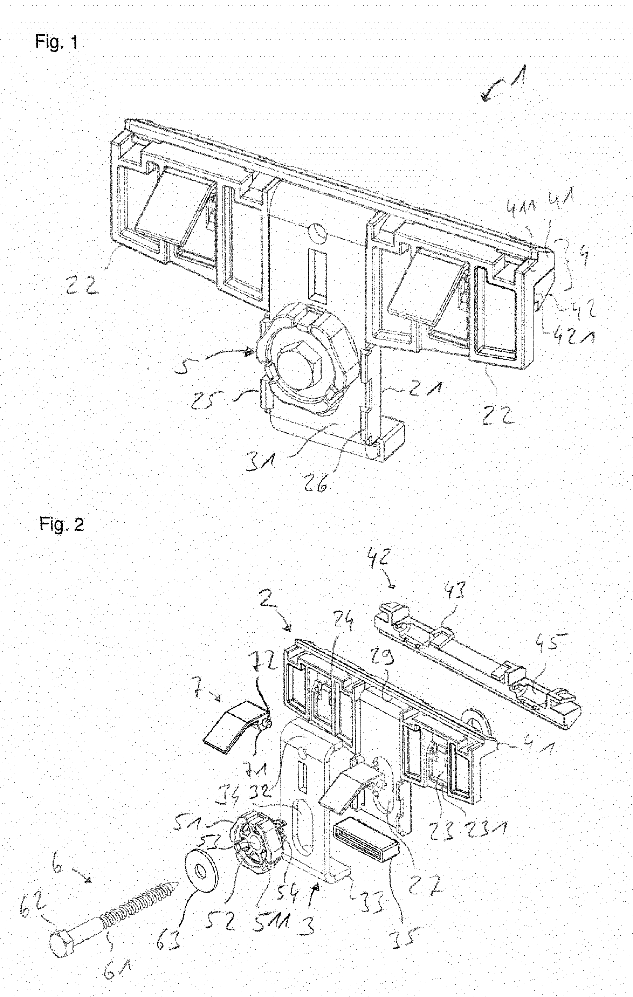

- Figur 1: die schematische Darstellung eines Wandankers zur wandseitigen Befestigung einer Sanitärwanne;
- Figur 2: eine Explosionsdarstellung des Wandankers aus Figur 1;
- Figur 3: den Wandanker aus Figur 1 mit zwei angeordneten C-Profilschienen in einer ersten räumlichen Darstellung;
- Figur 4: die vergrößerte Detaildarstellung des Einfädelungsbereichs von C-Profilschiene und Profilaufnahme aus Figur 3
- Figur 5: den Wandanker aus Figur 1 mit zwei angeordneten C-Profilschienen in einer zweiten räumlichen Darstellung;
- Figur 6: die Darstellung eines Befestigungssets mit mehreren Wandankern in einer Montageanordnung.

Der als Ausführungsbeispiel gewählte Wandanker 1 besteht im Wesentlichen aus einem Grundkörper 2, an dem ein Stützblech 3 befestigt ist und der eine Profilaufnahme 4 aufweist. Weiterhin ist ein Stellrad 5 angeordnet, durch das eine Befestigungsschraube 6 geführt ist.

Der Grundkörper 2 ist im Ausführungsbeispiel aus Kunststoff hergestellt, vorzugsweise aus Polyamid oder Polypropylen. Durch die Ausbildung aus einem solchen Kunststoff ist eine Schallentkopplung zwischen einer aufzunehmenden Sanitärwanne und der Gebäudewand erzielt. Der Grundkörper 2 weist eine im Wesentlichen T-förmige Gestalt auf und umfasst ein Mittelstück 21, an das orthogonal seitlich gegenüberliegend zwei Arme 22 angestellt sind, die miteinander fluchten. Auf seiner an eine Wand anzulegenden Rückseite ist eine Halteleiste 41 angeordnet, an der eine Klemmleiste 42 verschiebbar gelagert ist. Die Klemmleiste 42 weist hierzu Führungsstege 43 auf, die in hierzu in der Halteleiste 41 angeordnete Führungsschlitze 44 eingreifen. Die Klemmleiste 42 ist so über die Führungsstege 43 linear bewegbar in der Halteleiste 41 geführt.

Durch die Halteleiste 41 und die Klemmleiste 42 ist die Profilaufnahme 4 gebildet. Die Halteleiste 41 und die Klemmleiste 42 weisen jeweils einen Querschnitt eines hälftigen Trapezes auf, an den sich ein quaderförmiger Absatz 411, 421 anschließt. Durch die so ausgeformte Halteleiste 41 und Klemmleiste 42 ist ein zusammengesetzter trapezförmiger Querschnitt der Profilaufnahme 4 erzielt, an den sich ein aus den quaderförmigen Absätzen 411, 421 zusammengesetzter Absatz zum Durchtritt durch den Längsschlitz 82 einer von der Profilaufnahme 4 aufgenommenen C-Profilschiene anschließt.

Die Klemmleiste 42 weist weiterhin zwei jeweils im Bereich eines Armes 22 des Grundkörpers 2 angeordnete Eingriffsmulden 45 zum Eingriff jeweils einer Nocke 71 eines Spannhebels 7 auf.

Auf seiner der Profilaufnahme 4 gegenüberliegenden Vorderseite ist in jedem Arm 22 des Grundkörpers 2 eine quaderförmige Vertiefung 23 eingebracht, in der eine Achsaufnahme 24 vorhanden ist. An ihrer der Achsaufnahme 24 gegenüberliegenden Seite sind in der Vertiefung 23 beabstandet zueinander zwei Ausnehmungen 231 eingebracht.

In den Vertiefungen 23 ist jeweils ein Spannhebel 7 angeordnet. Der Spannhebel 7 weist an einem Ende eine orthogonal auskragende, endseitig abgerundete Nocke 71 auf, durch die eine Achse 72 geführt ist, die in der Achsaufnahme 24 drehbar gelagert ist. Dabei greift die Nocke 71 eines jeden Spannhebels 7 in eine Eingriffsmulde 45 der Klemmleiste 42 ein. Durch Verschwenken des Spannhebels 7 wird die Klemmleiste von der Halteleiste weg verschoben (Klemmposition).

An seinem der Achse 72 gegenüberliegenden Ende weist der Spannhebel 7 beabstandet zueinander zwei - nicht dargestellte - Vorsprünge auf, die in Klemmposition in eine Ausnehmung 231 der Vertiefung 23 eingreifen. In der Klemmposition ist der Spannhebel 7 flächenbündig in der Vertiefung 23 positioniert.

Das Mittelstück 21 ist an seiner der Profilaufnahme 4 gegenüberliegenden Vorderseite mit einem umlaufenden Rand 25 versehen, der an der den Armen 22 gegenüberliegenden Unterseite offen ist. Unterhalb der Arme 22 sind an die beiden Längsseiten des Randes 25 gegenüberliegend sich nach innen erstreckende Führungsarme 26 angeordnet. Zwischen den Führungsarmen 26 ist in das Mittelstück 21 ein Langloch 27 eingebracht, das an einer Seite mit einer Verzahnung 28 versehen ist. Beabstandet zum Langloch 27 ist in das Mittelstück 21 in Höhe der Profilaufnahme 23 ein Einschub 29 zur Aufnahme eines ersten Schenkels 32 des Stützblechs 3 eingebracht.

Das Stützblech 3 ist im Wesentlichen in Art eines U-förmigen Blechbiegestanzteils ausgeführt. In die Deckseite 31 des Stützblechs 3 ist ein Langloch 34 eingebracht. Das Stützblech 3 ist mit seinem ersten Schenkel 32 in den Einschub 29 des Mittelstücks 21 eingesteckt, wobei das Langloch 34, das entsprechend dem Langloch 27 des Mittelstücks 21 ausgebildet ist, mit diesem fluchtet. Das Stützblech 31 ist zwischen den Führungsarmen 26 des Grundkörpers 2 gehalten, wobei sich der zweite Schenkel 33 des Stützblechs 31 unterhalb des Mittelstücks 21 im Wesentlichen parallel zur Profilaufname 4 erstreckt. Auf den zweiten Schenkel 33 ist eine Schutzkappe 35 aufgestülpt. Im Ausführungsbeispiel ist die Schutzkappe 35 aus einem Elastomerkunststoff hergestellt. Alternativ kann die Schutzkappe 35 auch aus Gummi oder aus einem sonstigen Kunststoff hergestellt sein.

Die C-Profilschiene 8 ist im Wesentlichen quaderförmig ausgebildet und weist an einer Längsseite einen Längsschlitz 81 auf, wodurch zwei gegenüberliegend angeordnete freie Schenkel 82 gebildet sind. Innen sind in der C-Profilschiene 8 gegenüberliegend zwei Streben 84 vorhanden, die sich über die gesamte Länge der C-Profilschiene 8 erstrecken und jeweils von oberhalb eines freien Schenkels 82 bis zur dem Längsschlitz 81 gegenüberliegenden Deckseite 83 verlaufen. Hierdurch weist die C-Profilschiene 8 eine trapezförmige Innenkontur auf, die im Wesentlichen der Außenkontur der Profilaufname 4 entspricht, auf die sie aufschiebbar ist. Die C-Profilschiene 8 weist somit einen Querschnitt mit einer rechteckigen Außenkontur und einer trapezförmigen Innenkontur 85 auf - unterbrochen durch den Längsschlitz 81.

Das Stellrad 5 umfasst ein Griffstück 51, das im Wesentlichen in Form eines sechsseitigen Prismas ausgebildet ist und umlaufend mit Einwölbungen versehen ist. Mittig ist in das Griffstück 51 eine zylindrische Einsenkung 52 zur Aufnahme einer Scheibe 63 eingebracht. Die Einsenkung 52 geht in eine zentrische Bohrung 53 über, die in dem zylindrischen Hohlraum einer an das Griffstück 51 angeformten Hülse mündet, die außen mit einem Ritzel 54 versehen ist.

Das Stellrad 5 ist mit seiner Hülse durch das Langloch 34 des Stützblechs 3 in das Langloch 27 des Grundkörpers 2 geführt, wobei die Zähne des Ritzels 54 in die Verzahnung 28 des Langlochs 27 eingreifen. Axial ist das Stellrad 5 über eine Sicherungskappe 55 an dem Grundkörper 2 fixiert, die auf das Ritzel 54 aufgeclipst ist. An dem Stellrad 5 sind umlaufend jeweils um 120° versetzt zueinander drei Rastzungen 511 angeordnet, über welche die Scheibe 63 verliersicher in der Einsenkung 52 gehalten ist.

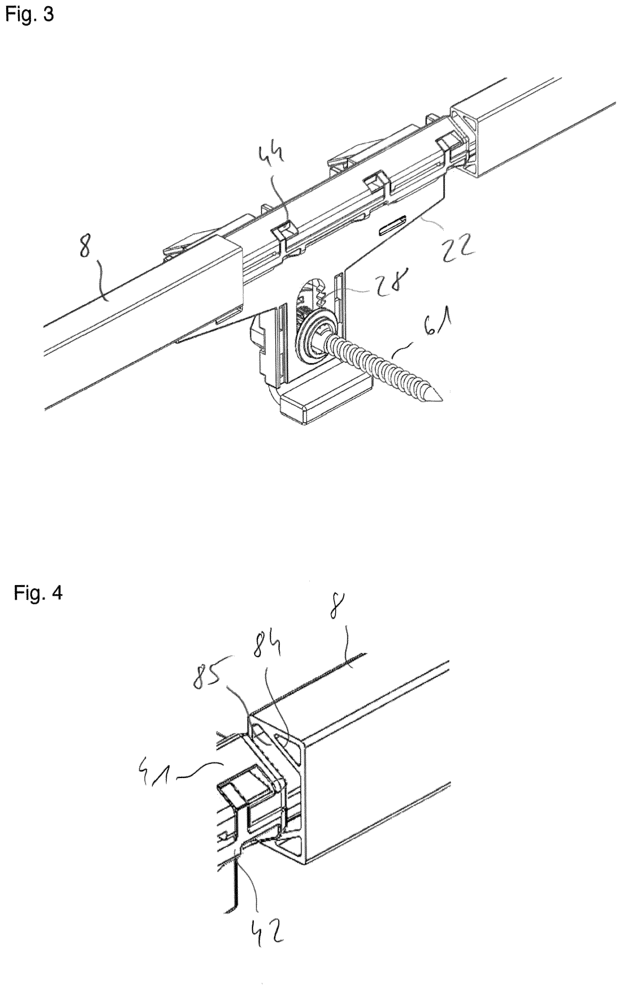

In Figur 3 ist der Wandanker mit zwei auf die beiden Arme 22 aufzuschiebenden C-Profilschienen 8 gezeigt. Hierbei sind die C-Profilschienen 8 derart auf jeweils einen Arm 22 aufgeschoben, dass die beiden quaderförmigen Absätze 411, 421 der Halteleiste 41 und der Klemmleiste 42 durch den Längsschlitz 81 der C-Profilschienen 8 hindurchtreten. Die Spannhebel 7 sind ausgeklappt. In dieser Stellung liegt die Klemmleiste 21 an der Halteleiste 41 an (Löseposition).

Die Halteleiste 41 und die Klemmleiste 42 sind bei aufgeschobenen C-Profilschienen 8 vollständig von diesen eingefasst. Werden die Spannhebel 7 eingeklappt (Klemmposition), wird die Klemmleiste 42 durch die Nocken 71 in die der Halteleiste 41 entgegengesetzte Richtung gegen die trapezförmige Innenkontur 85 der C-Profilschienen 8 gepresst, die so form- und kraftschlüssig mit der Profilaufnahme 4 des Grundkörpers 2 verbunden sind.

Zur Befestigung des Wandankers 1 wird die Befestigungsschraube 6 mit ihrem Schaft 61 durch das Stellrad 5 geführt und in eine Wand 9 geschraubt, an der auch der Wannenrand einer - nicht dargestellten - Bade- oder Duschwanne anliegt. Der Kopf 62 der Befestigungsschraube 6 liegt dabei auf der Scheibe 63 auf. Der Grundkörper 2 liegt zunächst mit seinem Langloch 27 auf dem Ritzel 54 der Hülse des Stellrades 5 auf. Nach leichtem Anziehen der Befestigungsschraube 6 kann nun durch einfaches Drehen des Stellrades 5 die gewünschte Höhe des Wandankers 1 sowie des auf der C-Profilschiene 8 aufliegenden - nicht dargestellten - Wannenrandes eingestellt werden. Die Verstelleinrichtung zur Justierung der Höhe funktioniert wir folgt: Die Drehung des Stellrades 5 bewirkt eine Drehung des mit diesem verbundenen Ritzels 54, dessen Zähne in die Verzahnung 28 des Langlochs 27 des Grundkörpers 2 eingreifen und diesen tangential bewegen. Nach Einstellen der gewünschten Höhe kann die Befestigungsschraube 6 nun festgezogen werden.

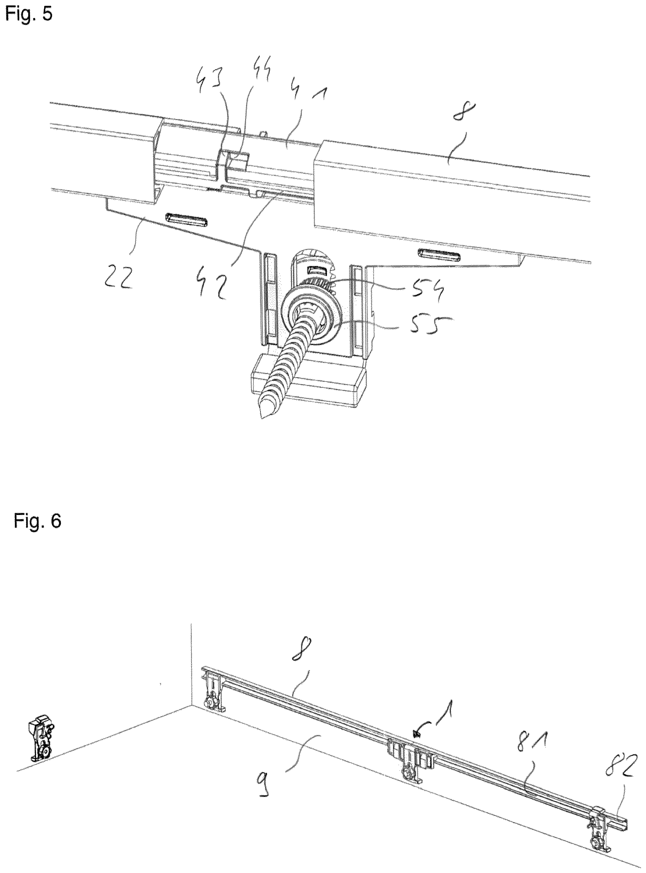

In Figur 6 ist eine Wandankeranordnung mit verschiedenen Befestigungssets dargestellt. Hier ist der vorstehend beschriebene Wandanker 1 angeordnet, auf dessen gesamte Profilaufnahme 4 eine C-Profilschiene 8 aufgeschoben und klemmend befestigt ist. An ihrem dem Wandanker 1 gegenüberliegenden Ende ist ein Wandhalter 91 angeordnet, der die C-Profilschiene 8 mit einen Klemmbügel umgreift, der über eine Schraube mit Flügelmutter feststellbar ist. Der Wandhalter 91 weist ebenfalls eine Verstelleinrichtung auf, der entsprechend der Verstelleinrichtung des zuvor beschriebenen Wandankers 1 ausgebildet ist.

## Patentansprüche

1. Wandanker zur wandseitigen Befestigung einer Sanitärwanne, umfassend einen Grundkörper (2), der ein Langloch (27) aufweist, durch das eine Befestigungsschraube (6) zur Befestigung des Grundkörpers (2) an einer Wand geführt ist, wobei wenigstens eine Profilaufnahme (4) für eine einen Längsschlitz (81) aufweisende C-Profischiene (8) angeordnet ist, die Mittel zur klemmenden Fixierung einer aufgenommenen C-Profilschiene (8) aufweist, wobei die Profilaufnahme (4) eine fest mit dem Grundkörper verbundene Halteleiste (41) und eine relativ zu dieser bewegbare Klemmleiste (42) umfasst, wobei die Mittel durch die Klemmleiste (42) gebildet sind, die mit wenigstens einem Spannhebel (7) verbunden ist, über den sie innerhalb einer von der Profilaufnahme (4) aufgenommenen C-Profilschiene (8) gegen diese pressbar ist, **dadurch gekennzeichnet, dass** der wenigstens eine Spannhebel (7) um eine in Längsrichtung des Grundkörpers (2) verlaufende Achse (72) schwenkbar ist.

2. Wandanker nach Anspruch 1, **dadurch gekennzeichnet, dass** die Halteleiste (41) und die Klemmleiste (42) jeweils einen quaderförmigen Absatz (411, 421) zum Durchtritt durch den Längsschlitz (81) der C-Profilschiene (8) aufweisen.

3. Wandanker nach Anspruch 1 oder 2, **dadurch gekennzeichnet, dass** die durch die Halteleiste (41) und die Klemmleiste (42) gebildete Profilaufnahme (4) einen dreieck- oder trapezförmigen Querschnitt aufweist, wobei die C-Profilschiene (8) eine hiermit korrespondierende Innenkontur (85) mit dreieck- oder trapezförmigem Querschnitt aufweist.

4. Wandanker nach einem der vorgenannten Ansprüche, **dadurch gekennzeichnet, dass** sich die Profilaufnahme (4) über die gesamte Länger des Grundkörpers (2) erstreckt.

5. Wandanker nach einem der vorgenannten Ansprüche, **dadurch gekennzeichnet, dass** der Grundkörper (2) T-förmig ausgebildet ist, wobei sich die Profilaufnahme (4) über beide seitlich auskragenden Arme (22) hin erstreckt.

6. Wandanker nach Anspruch 5, **dadurch gekennzeichnet, dass** an jedem Arm (22) des Grundkörpers (2) ein Spannhebel (7) angeordnet ist.

7. Wandanker nach einem der vorgenannten Ansprüche, **dadurch gekennzeichnet, dass** der wenigstens eine Spannhebel (7) einen Nocken (71) aufweist, über den bei einer Schwenkbewegung des Spannhebels (7) eine Verschiebung der Klemmleiste (42) bewirkt ist.

8. Wandanker nach einem der vorgenannten Ansprüche, **dadurch gekennzeichnet, dass** der wenigstens eine Spannhebel (7) in der Klemmposition von einer in dem Grundkörper (2) eingebrachten Vertiefung (23) aufgenommen ist.

9. Wandanker nach Anspruch 8, **dadurch gekennzeichnet, dass** wenigstens ein Spannhebel (7) wenigstens einen Vorsprung aufweist, der in Klemmposition in eine in der Vertiefung (23) angeordnete Ausnehmung (231) eingreift.

10. Wandanker nach einem der vorgenannten Ansprüche, **dadurch gekennzeichnet, dass** die Klemmleiste (42) Führungsstege (43) aufweist, die in Führungsschlitzen (44) der Halteleiste (41) geführt sind.

11. Wandanker nach einem der vorgenannten Ansprüche, **dadurch gekennzeichnet, dass** Verstellmittel zur Verschiebung des Grundkörpers (2) entlang einer in dem Langloch (27) angeordneten Befestigungsschraube (6) angeordnet sind, wobei die Verstellmittel eine Hülse umfassen, durch welche die Befestigungsschraube (6) geführt ist, wobei die Hülse ein Ritzel (54) aufweist, das in eine in dem Langloch (27) angeordnete Verzahnung (28) eingreift.

12. Wandanker nach Anspruch 11, **dadurch gekennzeichnet, dass** die Hülse mit einem Drehgriff oder einem Stellrad (5) verbunden ist.

13. Befestigungsset, umfassend einen Wandanker (1) nach einem der Ansprüche 3 bis 12 und wenigstens eine C-Profilschiene (8), die eine trapez- oder dreieckförmige Innenkontur aufweist und die auf der Profilaufnahme (23) des Wandankers (1) aufschiebbar und durch eine Schwenkbewegung des Spannhebels (7) klemmend fixierbar ist.

## Claims

1. Wall anchor for wall-side fastening of a sanitary bathtub comprising a base body (2), which has an elongated hole (27), through which a fastening screw (6) for fastening the base body (2) to a wall is guided, wherein at least one profile holder (4) is arranged for a C-profile rail (8) having a longitudinal slot (81), which has means for the clamping fixation of a received C-profile rail (8), wherein the profile holder (4) comprises a holding strip (41) firmly connected to the base body and a clamping strip (42) movable relative thereto, wherein the means are formed by the clamping strip (42), which is connected to at least one clamping lever (7), via which it can be pressed within a C-profile rail (8) received by the profile holder (4) against said rail, **characterised in that** the at least one clamping lever (7) is pivotable about an axle (72) extending in the longitudinal direction of the base body (2).

2. Wall anchor according to claim 1, **characterised in that** the holding strip (41) and the clamping strip (42) each have a cuboid shoulder (411, 421) for passing through the longitudinal slot (81) of the C-profile rail (8).

3. Wall anchor according to claim 1 or 2, **characterised in that** the profile holder (4) formed by the holding strip (41) and the clamping strip (42) has a triangular or trapezoidal cross-section, wherein the C-profile rail (8) has an inner contour (85) corresponding thereto with a triangular or trapezoidal cross-section.

4. Wall anchor according to one of the previous claims, **characterised in that** the profile holder (4) extends over the entire length of the base body (2).

5. Wall anchor according to one of the previous claims, **characterised in that** the base body (2) is T-shaped, wherein the profile holder (4) extends over both laterally projecting arms (22).

6. Wall anchor according to claim 5, **characterised in that** a clamping lever (7) is arranged on each arm (22) of the base body (2).

7. Wall anchor according to one of the previous claims, **characterised in that** the at least one clamping lever (7) has a cam (71), via which a displacement of the clamping strip (42) is effected during a pivoting movement of the clamping lever (7).

8. Wall anchor according to one of the previous claims, **characterised in that** the at least one clamping lever (7) is received in the clamping position by a recess (23) provided in the base body (2).

9. Wall anchor according to claim 8, **characterised in that** at least one clamping lever (7) has at least one projection, which engages in a cut-out (231) arranged in the recess (23) in the clamping position.

10. Wall anchor according to one of the previous claims, **characterised in that** the clamping strip (42) has guide webs (43), which are guided in guide slots (44) of the holding strip (41).

11. Wall anchor according to one of the previous claims, **characterised in that** adjusting means are arranged for displacing the base body (2) along a fastening screw (6) arranged in the elongated hole (27), wherein the adjusting means comprise a sleeve, through which the fastening screw (6) is guided, wherein the sleeve has a pinion (54), which engages in a toothing (28) arranged in the elongated hole (27).

12. Wall anchor according to claim 11, **characterised in that** the sleeve is connected to a rotary handle or an adjusting wheel (5).

13. Fastening set comprising a wall anchor (1) according to one of claims 3 to 12 and at least one C-profile rail (8), which has a trapezoidal or triangular inner contour and which can be pushed onto the profile holder (23) of the wall anchor (1) and can be fixed in a clamping manner by a pivoting movement of the clamping lever (7).

## Revendications

1. Ancrage mural pour la fixation, côté mur, d'une baignoire sanitaire, comprenant un corps de base (2) qui présente un trou oblong (27) à travers lequel est guidée une vis de fixation (6) servant à fixer le corps de base (2) contre un mur, sachant qu'est disposé au moins un logement (4) pour profilé destiné à un rail profilé en C (8) présentant une fente longitudinale (81), logement qui présente des moyens pour immobiliser par bridage un rail profilé en C (8) logé, sachant que le logement (4) pour profilé comprend un bandeau de retenue (41) fermement relié au corps de base, et un bandeau de bridage (42) pouvant se déplacer relativement au bandeau de retenue, sachant que les moyens sont formés par le bandeau de bridage (42) qui est relié avec au moins un levier de serrage (7), levier via lequel le bandeau de bridage peut être appliqué de force contre le rail profilé en C (8) logé dans le logement (4) pour profilé, **caractérisé en ce qu'**au moins un levier de serrage (7) peut pivoter autour d'un axe (72) s'étendant dans le sens longitudinal du corps de base (2).

2. Ancrage mural selon la revendication 1, **caractérisé en ce, que** le bandeau de retenue (41) et le bandeau de bridage (42) forment respectivement un épaulement parallélépipédique (411, 421) servant au passage à travers la fente longitudinale (81) du rail profilé en C (8).

3. Ancrage mural selon la revendication 1 ou 2, **caractérisé en ce, que** le logement (4) pour profilé formé par le bandeau de retenue (41) et le bandeau de bridage (42) présente une section triangulaire ou trapézoïdale, sachant que le rail profilé en C (8) présente un contour intérieur (85) épousant cette section et présentant une section triangulaire ou trapézoïdale.

4. Ancrage mural selon l'une des revendications précédentes, **caractérisé en ce que** le logement (4) pour profilé s'étend sur toute la longueur du corps de base (2).

5. Ancrage mural selon l'une des revendications précédentes, **caractérisé en ce que** le corps de base (2) est configuré en T, sachant que le logement (4) pour profilé s'étend sur les deux bras (22) latéralement en porte-à-faux.

6. Ancrage mural selon la revendication 5, **caractérisé en ce, que** contre chaque bras (22) du corps de base (2) est disposé un levier de serrage (7).

7. Ancrage mural selon l'une des revendications précédentes, **caractérisé en ce qu'**au moins un levier de serrage (7) présente une came (71), laquelle provoque, lors d'un mouvement pivotant du levier de serrage (7), un déplacement du bandeau de bridage (42).

8. Ancrage mural selon l'une des revendications précédentes, **caractérisé en ce qu'**au moins un levier de serrage (7) est logé, dans la position de bridage, dans un creux (23) ménagé dans le corps de base (2).

9. Ancrage mural selon la revendication 8, **caractérisé en ce, qu'**au moins un levier de serrage (7) présente au moins une saillie qui, en position de bridage, engrène dans un évidement (231) disposé dans le creux (23).

10. Ancrage mural selon l'une des revendications précédentes, **caractérisé en ce que** le bandeau de bridage (42) présente des nervures de guidage (43) guidées dans des fentes de guidage (44) que présente le bandeau de retenue (41).

11. Ancrage mural selon l'une des revendications précédentes, **caractérisé en ce que** sont disposés des moyens d'ajustement servant à déplacer le corps de base (2) le long d'une vis de fixation (6) disposée dans le trou oblong (27), sachant que les moyens d'ajustement comprennent une douille à travers laquelle est guidée la vis de fixation (6), sachant que la douille présente un pignon (54) engrenant dans une denture (28) disposée dans le trou oblong (27).

12. Ancrage mural selon la revendication 11, **caractérisé en ce, que** la douille est reliée avec une poignée tournante ou une molette d'ajustement (5).

13. Kit de fixation, comprenant un ancrage mural (1) selon l'une des revendications 3 à 12 et au moins un rail profilé en C (8) qui présente un contour intérieur de forme trapézoïdale ou triangulaire et qui est enfilable sur le logement (23) pour profilé de l'ancrage mural (1), et qui est immobilisable par bridage en imprimant un mouvement pivotant au levier de serrage (7).
